# EUROPÄISCHE PATENTSCHRIFT

(11) **EP 1 072 654 B1**
(45) Veröffentlichungstag und Bekanntmachung des Hinweises auf die Patenterteilung: **16.04.2008**
(21) Anmeldenummer: 00111718.3
(22) Anmeldetag: 02.06.2000
(51) Int. Cl.: C09D 17/00, C09D 11/00, C09D 7/12

(54) **Wässrige Russdispersionen**
Aqueous dispersions of carbon black
Dispersions aqueuses de noir de carbone

(30) Priorität: 21.07.1999 DE 19934282
(43) Veröffentlichungstag der Anmeldung: 31.01.2001
(73) Patentinhaber: Evonik Degussa GmbH, 40474 Düsseldorf (DE)
(72) Erfinder: Kalbitz, Werner, 63517 Rodenbach (DE); Alfons, Karl, Dr., 63584 Gründau (DE); Kleinhenz, Horst, Grosskrotzenburg (DE); Johann, Matthias, Dr., 63796 Kahl (DE); Stübbe, Andreas, 63789 Aschaffenburg (DE); Tauber, Gerd, 63500 Seligenstadt (DE)

(56) Entgegenhaltungen:
- EP-A- 0 962 504
- DATABASE WPI Section Ch, Week 198737 Derwent Publications Ltd., London, GB; Class A25, AN 1987-260134 XP002261032 & JP 62 179541 A (TOYO RUBBER IND CO LTD), 6. August 1987 (1987-08-06)

## Beschreibung

Die Erfindung betrifft wäßrige kationisch/nicht-ionisch stabilisierte Rußdispersionen, ein Verfahren zu ihrer Herstellung und ihre Verwendung.

Wäßrige Rußdispersionen werden zur Herstellung von Druckfarben oder auch direkt als Tinten bei zum Beispiel Tintenstrahldruckern (Ink-Jet) eingesetzt.

Das Ink-Jet-Druckverfahren ist eine bekannte Vervielfältigungstechnik, bei der die Druckfarbe drucklos, also ohne Kontakt des Druckkopfes mit dem Druckmedium, übertragen wird. Dabei werden Tintentropfen aus einer Düse auf ein Empfangsmaterial gespritzt, wobei deren Ablenkung elektronisch steuerbar ist. Diese Technik, auch als druckloses Drucken bezeichnet, eignet sich insbesondere zum Bedrucken von Produkten mit unregelmäßigen Oberflächen und Verpackungen, weil zwischen Druckkopf und Bedruckstoff ein gewisser Abstand besteht. Das Druckverfahren ist sehr flexibel und relativ preiswert und wird deshalb auch im Computerdruck, etwa als Arbeitsplatzdrucker, verwendet. Zunehmend kommt das Ink-Jet-Verfahren auch im industriellen Bereich, etwa in der Außenwerbung, zur Anwendung. In der Außenwerbung muß die Tinte besondere Anforderungen an Lichtechtheit und Wasserbeständigkeit erfüllen. Darüber hinaus müssen die Farbbestandteile sehr feinteilig sein, damit die Druckdüsen nicht verstopfen. Als farbgebende Substanzen werden sowohl Farbstoffe wie in jüngerer Zeit auch Pigmente verwendet. Letztere haben den Vorteil gegenüber Farbstoffen, daß die Lichtechtheit sehr hoch ist und daß sie wasserbeständig sind. Pigmente haben einen Nachteil gegenüber Farbstoffen, der darin besteht, daß sie nur durch eine Behandlung mit oberflächenaktiven Substanzen (Tensiden) stabile Dispersionen mit hoher Lagerbeständigkeit bilden. Pigmentteilchen liegen nicht in der Form von Primärteilchen vor sondern in der Form von Aggregaten. Pigmentaggregate sind größer als lösliche Farbstoffe. Sind Pigmentaggregate nicht ausreichend fein dispergiert, verstopfen sie die Düsen des Druckkopfes. Große Aggregate verändern außerdem die Lichtabsorptionseigenschaften des Pigmentrußes. Eine Vergräulichung der Drucke und ein Verlust an Deckkraft ist die Folge.

Erste Patente, die die Verwendung von Pigmentrußen in Ink-Jet-Tinten behandeln, sind die Schriften US-A 5,085,698 und US-A 5,320 668. Darin wird die Verwendung von wasserlöslichen Acrylaten zur Pigmentstabilisierung beschrieben.

Es ist bekannt, wäßrige Rußdispersionen mit Rußen, deren mittlere Primärteilchengröße nicht größer als 30 nm und deren DBP-Zahl mindestens 75 ml/100 g beträgt, herzustellen (US-A 5,538,548).

Es ist weiterhin bekannt, wäßrige Rußdispersionen unter Verwendung von wasserlöslichen organischen Lösungsmitteln und wasserlöslichen Acrylharzen herzustellen (US-A 5,609,671) .

Aus EP 0 962 504 sind Rußdispersionen bekannt, enthaltend nicht-ionische und/oder anionische Netzmittel, Ruß und Wasser. Die Rußdispersion kann zusätzlich zu den nichtionischen Netzmitteln ein anionisches und/oder kationisches Netzmittel enthalten.

Ein Nachteil der bekannten wäßrigen Rußdispersionen ist das Verlaufen, das sogenannte Ausbluten, nach dem Aufspritzen auf den Träger. Marktübliche Dispersionen haben Zetapotentiale < 0 mV. Durch positive Oberflächenladung der dispergierten Partikel (Zetapotentiale > 0 mV) kann leicht eine gezielte Flockulation der Dispersion während bzw. nach dem Aufbringen auf den Träger erreicht und somit einem Ausbluten entgegengewirkt werden.

Es besteht somit die Aufgabe, Rußdispersionen, die diesen Nachteil des Ausblutens nicht aufweisen und zudem lagerstabil sind, herzustellen.

Gegenstand der Erfindung sind wäßrige Rußdispersionen, welche bezogen auf die gesamte Dispersion neben Wasser die folgenden Komponenten enthalten:

| | |
|---|---|
| Ruß | 1 bis 45 Gew.-%, vorzugsweise 5 bis 25 Gew.-%, |
| kationisches Tensid | 1 bis 40 Gew.-%, vorzugsweise 5 bis 25 Gew.-%, |
| nicht ionisches Tensid 0,5 bis 10 Gew.-%, | vorzugsweise 2 bis 10 Gew.-%, |

wobei das kationische Tensid mindestens eine Verbindung der Formel 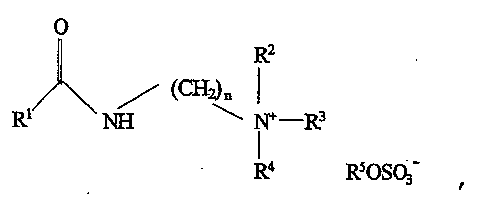 R¹-COOH: Ricinolsäure R², R³, R⁴: gleich oder verschieden sein können und aus Alkylgruppen C₁ bis C₅ oder 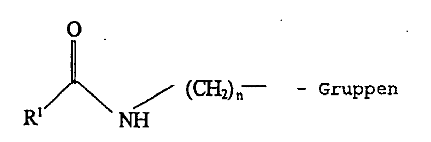 bestehen
R⁵_{:} Alkylgruppen C₁ bis C₅
n: natürliche Zahl 1 - 5
enthält.

In einer Ausführungsform kann das kationische Tensid eine Netzmittelkombination oder Gemisch aus mindestens zwei kationischen Netzmitteln sein.

Als nichtionische Tenside kann mindestens eine Verbindung aus der Gruppe vernetzte Polyoxyethylenacrylsäure, Fettalkoholoxethylate, Nonylphenolpolyglycolether, Polyvinylpyrolidon, Glycerolfettsäureester, Propylenglykolfettsäureester, Sorbitanfettsäureester, Polyoxyethylensorbitanfettsäureester, Tetraoleinsäurepolyoxyethylensorbitol, Polyoxyethylenalkylether, Polyoxyethylenalkylphenylether, Polyoxyethylenpolyoxypropylenglykol, Polyoxyethylenpolyoxypropylenalkylether, Polyethylenglycolfettsäureester, höhere Fettsäurealkoholester, Polyhydricalkoholfettsäureester, eingesetzt werden.

Die Dispersion kann in einer bevorzugten Ausführungsform eine Mischung aus mindestens zwei nichtionischen Netzmitteln enthalten.

Als Ruß können Pigmentruße mit einer mittleren Primärteilchengröße von 8 bis 80 nm, vorzugsweise 10 bis 35 nm und einer DBP-Zahl von 40 bis 200 ml/100g, vorzugsweise 60 bis 150 ml/100g eingesetzt werden. Als Ruße können Pigmentruße, die mittels Furnace-, Gasruß-, Channel- oder Flammrußverfahren hergestellt werden, eingesetzt werden. Beispiele hierfür sind Farbruß FW 200, Farbruß FW 2, Farbruß FW 2 V, Farbruß FW 1, Farbruß FW 18, Farbruß S 170, Farbruß S 160, Spezialruß 6, Spezialruß 5, Spezialruß 4, Spezialruß 4A, Printex 150 T, Printex U, Printex V, Printex 140 U, Printex 140 V, Printex 95, Printex 90, Printex 85, Printex 80, Printex 75, Printex 55, Printex 45, Printex 40, Printex P, Printex 60, Printex XE 2, Printex L 6, Printex L, Printex 300, Printex 30, Printex 3, Printex 35, Printex 25, Printex 200, Printex A, Printex G, Spezialruß 550, Spezialruß 350, Spezialruß 250, Spezialruß 100 der Firma Degussa-Hüls AG. In einer bevorzugten Ausführungsform der Erfindung können Gasruße eingesetzt werden.

In einer weiteren Ausführungsform können Si-haltige Ruße, bekannt aus DE 19613796, WO 96/37447 und WO 96/37547, und metallhaltige Ruße, bekannt aus WO 98/42778, eingesetzt werden.

Der in der Dispersion dispergierte Ruß kann in einer Ausführungsform der Erfindung eine mittlere Teilchengröße von 50 bis 250 nm aufweisen.

Ein weiterer Gegenstand der Erfindung ist ein Verfahren zur Herstellung der wäßrigen Rußdispersion, welches dadurch gekennzeichnet ist, daß man Ruß gemeinsam mit dem oder den Netzmitteln in Wasser dispergiert und gegebenenfalls für die Dispergierung Perlmühlen, Ultraschall-Geräte oder ein Ultra-Turrax verwenden. Im Anschluß an die Dispergierung kann die Rußdispersion zentrifugiert oder gefiltert werden.

Der pH-Wert der Dispersionen kann im sauren Bereich, vorzugsweise im Bereich von 1 - 4, liegen.

Die erfindungsgemäßen Dispersionen weisen eine sehr hohe Flockulationsstabilität im sauren pH-Wert und damit eine hohe Lagerstabilität auf.

Die erfindungsgemäßen Rußdispersionen weisen eine normale optische Dichte auf.

Die erfindungsgemäßen wäßrigen Rußdispersionen können zur Herstellung von Tinten, Lacken und Druckfarben, insbesondere Tinten für Tintenstrahldrucker verwendet werden.

### Beispiele

Die erfindungsgemäßen Rußdispersionen werden wie folgt hergestellt:

### 1. Vorbereitung der Netzmittellösung

Wasser vorlegen und unter Erwärmen bis höchstens 60 °C nicht-ionisches Netzmittel Lutensol AO 30 lösen und unter Rühren abkühlen.

### 2. Einarbeiten des Rußes

Ruß in vorbereitete Netzmittellösung unter langsamem Rühren (entweder von Hand oder mit langsamem Rührwerk) nach und nach einarbeiten. Falls bei Zugabe des Rußes eine merkliche Konsistenzerhöhung auftritt, wird das Kationtensid zugeführt. Ansonsten wird das Kationtensid erst nach Einarbeitung des Rußes unter Dispergierung zugegeben.

### 3. Dispergierung

### Ultraschall-Geräte

Die in Punkt 2 vorbereitete Dispersion wird mit einem Hochleistungsmischer (zum Beispiel Ultra Turrax) homogenisiert und mit dem Ultraschall-Gerät dispergiert. In der Zentrifuge können sehr grobe Teilchen von der so erhaltenen Dispersion abgetrennt werden.

Die Zusammensetzung der wäßrigen Rußdispersionen sowie ihre Eigenschaften sind in den Tabellen 1 und 2 dargestellt. Aus den Tabellen kann weiterhin ersehen werden, daß die erfindungsgemäßen wäßrigen Rußdispersionen eine gute Laberstabilität aufweisen.

**Tabelle 1**

| **Beispiel Nr_{.} Dispergierung: Ultraschall** | **1** | **2** |
|---|---|---|
| **Inhaltsstoffe** | | |
| Printex 90 | 15 | |
| Farbruß FW 18 | | 15 |
| Lutensol AO 30 | 4 | 4 |
| Rewoquat RTM 50 | 6 | 6 |
| Wasser | 75 | 75 |
| Gesamt | 100 | 100 |
| Oberflächenspannung mN/m | 40,5 | 39,6 |
| mittlere Teilchengröße nm | 82 | 113 |
| opt. Dichte (5% Ruß / 15% TEG) | 1,46 | 1,48 |
| My | 150 | 151 |
| Mc | 152 | 153 |
| Zetapotential mV | +10 | +8 |
| pH-Wert | 2,7 | 2,3 |
| Stabilität | | |
| Viskosität, 1 Tag cPs | 22 | 25 |
| Viskosität, 28 Tage cPs | 28 | 34 |

**Tabelle 2**

| Rezeptur 1 | | | Rezeptur 2 | | | | |
|---|---|---|---|---|---|---|---|
| 15 % FW 18 | | | 15 % Printex 90 | | | | |
| 4 % Lutensol AO 30 | | | 5 % Lutensol AO 30 | | | | |
| 75 % dest. Wasser | | | 74 % dest. Wasser | | | | |
| 6 % Kationtensid | | | 6 % Kationtensid | | | | |

| Kat. Netzmittel | Lichtmikr. Beurteilung Rezeptur 1 | Lichtmikr. Beurteilung Rezeptur 2 | | Lagerung 50 °C, 3 d Rezeptur 1 | Lagerung 50 °C, 3d Rezeptur 2 | Zeta- Potential [mV] Rezeptur 1 | Zeta-Potential [mV] Rezeptur 2 |
|---|---|---|---|---|---|---|---|
| DP2-7949 | Ok | Ok | | Ok | Ok | nicht bestimmt | + 18 |
| DP7-7961 | Ok | Ok | | Ok | Ok | + 3,0 | + 2,9 |
| DP7-7962 | Ok | Ok | | Ok | Ok | + 2,7 | + 3,2 |
| DP7-7963 | Ok | Ok | | Ok | Ok | + 4,2 | nicht bestimmt |
| Magnafloc 1797 | Ok | Ok | | Ok | Ok | + 2,6 | + 2,3 |

Die Lichtmikroskopische Beurteilung erfolgt nach der Herstellung und nach 3 Tagen im Trockenschrank bei 50 °C.

Die Oberflächenspannung wird mit der Plattenmethode nach DIN 53 914 (3/80) bei 20 °C bestimmt. Die Oberflächenspannung der Rußdispersion ist in sofern von Bedeutung als eine hohe Oberflächenspannung die Bildung von Tröpfchen, welche die Düse beim Inkjet-Verfahren verlassen, positiv beeinflußt.

Das Zetapotential wird mit einem MBS-8000 der Firma Matec bestimmt. Die Proben werden unverdünnt gemessen. Das Zetapotential wird mittels der elektrokinetischen Schallamplitude (ESA) bestimmt. Das Zetapotential, das den Ladungszustand der Teilchenoberfläche charakterisiert, gibt einen Hinweis auf das für die Stabilisierung verwendete Netzmittel. Bei kationischen Netzmitteln ist das Zetapotential größer 0 mV, vorzugsweise größer / gleich 10 mV. Bei nichtionischen Netzmitteln liegt das Zetapotential üblicherweise bei ≤ 0 mV.

Die Teilchengrößenverteilung wird mittels der dynamischen Lichtstreuung (Photonenkorrelationsspektroskopie, PCS) ermittelt. Als Gerät wird ein Photonenkorrelationsspektrometer Nicomp N370 (Fa. Hiac/Royco) verwendet. Die Messung erfolgt in Reinstwasser. Die Auswertung erfolgt mit der Gauß-Verteilungsanalyse (Volumenverteilung).

Die optische Dichte wird mit Mcbeth RD 918 Densitometer an Prüfdrucken, hergestellt auf einem Hewlett Packard Drucker 660 C, bestimmt.

Der pH-Wert wird direkt in der Rußdispersion mit einer handelsüblichen Meßelektrode bestimmt.

Der Stabilitätstest wird wie folgt durchgeführt:

Die Dispersion wird 28 Tage bei Raumtemperatur gelagert, danach bis -30 °C eingefroren und auf 70 °C aufgeheizt.

Die Beispiele zeigen eine hohe Flockulationsstabilität und damit eine hohe Lagerstabilität, ersichtlich an dem geringen Viskositätsanstieg über 28 Tage (Raumtemperatur) und dem hohen Zetapotential. Die Farbwerte liegen im normalen Bereich. Die Teilchengrößen in der Dispersion sind auf Aggregatgrößenniveau und sind somit ein Hinweis für eine gute Dispersionsstabilität durch die kationische/nicht-ionische Netzmittelkombination.

Die Viskostitätsmessungen werden mit einem Brookfield Modell DV-II durchgeführt.

Die bei der Herstellung der Rußdispersionen verwendeten Komponenten sind wie folgt charakterisiert:
Der Ruß Printex 90 ist ein Furnaceruß mit einer mittleren Primärteilchengröße von 14 nm und einer DBP-Adsorption von 95 ml/100 g.
Der Farbruß FW 18 ist ein Gasruß mit einer mittleren Primärteilchengröße von 15 nm.
Rewoquat RTM 50 ist ein kationisches Netzmittel.

| | |
|---|---|
| Hersteller: | Witco |
| Stoffgruppe: | Ricinolsäure propylamido trimethylammonium methosulfat |

### Formel:

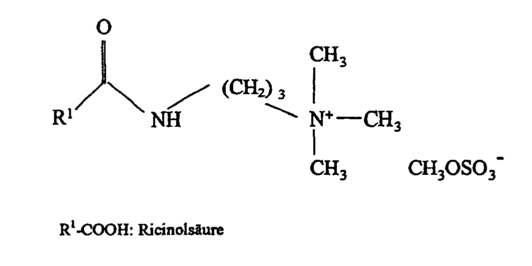

Magnafloc 1797 ist ein kationisches Netzmittel

| | |
|---|---|
| Hersteller: | Ciba Speciality Chemicals |
| Stoffgruppe: | Wässrige Lösung kationischer quervernetzter Kondensationsharze. |

DP2-7949 ist ein kationisches Netzmittel

| | |
|---|---|
| Hersteller: | Ciba Speciality Chemicals |
| Stoffgruppe: | Wässrige Lösung kationischer Homopolymere. |

DP7-7961 ist ein kationisches Netzmittel

| | |
|---|---|
| Hersteller: | Ciba Speciality Chemicals |
| Stoffgruppe: | Wässrige Lösung kationischer Polymere. |

DP7-7962 ist ein kationisches Netzmittel

| | |
|---|---|
| Hersteller: | Ciba Speciality Chemicals |
| Stoffgruppe: | Wässrige Lösung kationischer Polymere. |

DP7-7963 ist ein kationisches Netzmittel

| | |
|---|---|
| Hersteller: | Ciba Speciality Chemicals |
| Stoffgruppe: | Wässrige Lösung kationischer Polymere. |

Forbest 13 ist ein kationisches Netzmittel

| | |
|---|---|
| Hersteller: | Lukas Meyer |
| Compound neutr., | sauerer Polyester und Fettalkohol. |

Lutensol AO 30 ist ein nichtionisches Netzmittel.

| | |
|---|---|
| Hersteller: | BASF |
| Stoffgruppe: | nicht ionisch Fettalkoholoxethylat mit 30 Ethylenglykoleinheiten. |

## Patentansprüche

1. Wäßrige Rußdispersionen , enthaltend neben Wasser die folgenden Komponenten:
| | |
|---|---|
| Ruß | 1 bis 45 Gew.-%, |
| kationisches Tensid | 1 bis 40 Gew.-%, |
| nicht ionisches Tensid | 0,5 bis 10 Gew.-%, |
wobei das kationische Tensid mindestens eine Verbindung der Formel 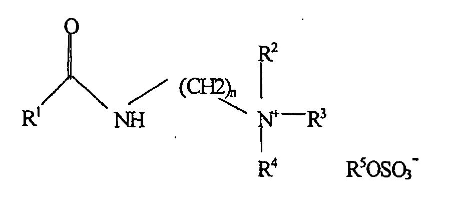
| | |
|---|---|
| R¹-COOH: | Ricinolsäure |
| R², R³, R⁴: | gleich oder verschieden sein können und aus Alkylgruppen C₁ bis C₅ oder |

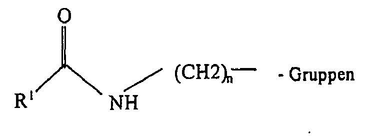
bestehen
| | |
|---|---|
| R⁵: | Alkylgruppen C₁ bis C₅ |
| n: | natürliche Zahl 1 -5 , |

2. Wäßrige Rußdsipersion nach Anspruch 1, **dadurch gekennzeichnet, daß** das nicht-ionische Tensid mindestens eine Verbindung aus der Gruppe vernetzte Polyoxyethylenacrylsäure, Fettalkoholoxethylate, Nonylphenolpolyglycolether, Polyvinylpyrolidon, Glycerolfettsäureester, Propylenglykolfettsäureester, Sorbitfettsäureester, Polyoxyethylensorbitfettsäureester, Tetraoleinsäurepolyoxyethylensorbitol, Polyoxyethylenalkylether, Polyoxyethylenalkylphenylether, Polyoxyethylenpolyoxypropylenglykol, Polyoxyethylenpolyoxypropylenalkylether, Polyethylenglycolfettsäureester, höhere Fettsäurealkoholester, Polyhydricalkoholfettsäureester ist.

3. Wäßrige Rußdispersion nach Anspruch 1 bis 2, **dadurch gekennzeichnet, daß** die Dispersion einen Pigmentruß einer mittleren Primärteilchengröße von 8 bis 80 nm und einer DBP-Zahl von 40 bis 200 ml/100g.

4. Wäßrige Rußdispersion nach Anspruch 1 bis 3, **dadurch gekennzeichnet, daß** der in der Dispersion dispergierte Ruß eine mittlere Teilchengröße von 50 bis 250 nm hat.

5. Wäßrige Rußdispersion nach Anspruch 1, **dadurch gekennzeichnet, daß** der Ruß in einer Menge von 5 bis 25 Gew.-% bezogen auf die gesamte Dispersion, enthalten ist.

6. Wäßrige Rußdispersion nach Anspruch 1, **dadurch gekennzeichnet, daß** das kationische Tensid in einer Menge von 5 bis 25 Gew.-% bezogen auf die gesamte Dispersion, enthalten ist.

7. Wäßrige Rußdispersion nach Anspruch 1, **dadurch gekennzeichnet, daß** das kationische Tensid eine Netzmittelkombination oder Gemisch aus mindestens zwei kationischen Netzmitteln ist.

8. Verfahren zur Herstellung der wäßrigen Rußdispersion nach Anspruch 1 bis 7, **dadurch gekennzeichnet, daß** man Ruß gemeinsam mit dem oder den Netzmitteln in Wasser dispergiert und gegebenenfalls für die Dispergierung Perlmühlen, Ultraschall-Geräte oder ein Ultra-Turrax verwendet.

9. Verfahren zur Herstellung der wäßrigen Rußdispersion nach Anspruch 8, **dadurch gekennzeichnet, daß** die wäßrige Rußdispersionen im Anschluß an die Dispergierung zentrifugiert oder gefiltert wird.

10. Verwendung der wäßrigen Rußdispersion nach Anspruch 1 bis 7, zur Herstellung von Tinten, Lacken und Druckfarben.

11. Verwendung der wäßrigen Rußdispersion nach Anspruch 10, zur Herstellung von Tinten für Tintenstrahldrucker.

## Claims

1. Aqueous carbon black dispersions comprising, as well as water, the following components:
| | |
|---|---|
| carbon black | 1% to 45% by weight, |
| cationic surfactant | 1% to 40% by weight, |
| non-ionic surfactant | 0.5% to 10% by weight, |
the cationic surfactant comprising at least one compound of the formula 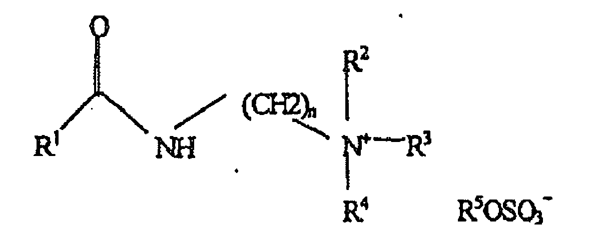
| | |
|---|---|
| R¹-COOH: | ricinoleic acid |
| R², R³, R⁴: | may be identical or different and each consists of alkyl groups C₁ to C₅ or |

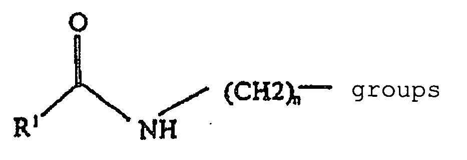
| | |
|---|---|
| R⁵: | alkyl groups C₁ to C₅ |
| n: | natural number 1-5. |

2. Aqueous carbon black dispersion according to Claim 1, **characterized in that** the non-ionic surfactant is at least one compound from the group of cross-linked polyoxyethylene acrylic acid, fatty alcohol oxyethylates, nonylphenolpolyglycol ether, polyvinylpyrrolidone, glycerol fatty acid ester, propyleneglycol fatty acid ester, sorbitol fatty acid ester, polyoxyethylene sorbitol fatty acid ester, tetraoleic acid polyoxyethylene sorbitol, polyoxyethylene alkyl ether, polyoxyethylenealkylphenyl ether, polyoxyethylenepolyoxypropylene glycol, polyoxyethyleneoxypropylene alkyl ether, polyethyleneglycol fatty acid ester, higher fatty acid alcoholic esters, polyhydric alcoholic fatty acid esters.

3. Aqueous carbon black dispersion according to Claim 1 to 2, **characterized in that** the dispersion contains a pigment black with a median primary particle size of 8 to 80 nm and a DBP number of 40 to 200 ml/100 g.

4. Aqueous carbon black dispersion according to Claim 1 to 3, **characterized in that** the carbon black dispersed in the dispersion has a median particle size of 50 to 250 nm.

5. Aqueous carbon black dispersion according to Claim 1, **characterized in that** the carbon black is present in an amount of 5% to 25% by weight relative to total dispersion weight.

6. Aqueous carbon black dispersion according to Claim 1, **characterized in that** the cationic surfactant is present in an amount of 5% to 25% by weight relative to total dispersion weight.

7. Aqueous carbon black dispersion according to Claim 1, **characterized in that** the cationic surfactant is a wetting agent combination or is a mixture of at least two cationic wetting agents.

8. Method of producing the aqueous carbon black dispersion according to Claim 1 to 7, **characterized in that** carbon black is dispersed together with the wetting agent or agents in water and bead mills, ultrasonic devices or an Ultra-Turrax are used if necessary for the dispersal.

9. Method of producing the aqueous carbon black dispersion according to Claim 8, **characterized in that** following the dispersal the aqueous carbon black dispersion is centrifuged or filtered.

10. Use of the aqueous carbon black dispersion according to Claim 1 to 7 for producing liquid inks, lacquers and printing inks.

11. Use of the aqueous carbon black dispersion according to Claim 10 for producing inks for inkjet printers.

## Revendications

1. Dispersions aqueuses de noir de carbone, contenant, outre de l'eau, les composants suivantes :
| | |
|---|---|
| noir de carbone | 1 à 45 % en poids, |
| tensioactif cationique | 1 à 40 % en poids, |
| tensioactif non ionique | 0,5 à 10 % en poids, |
le tensioactif cationique contenant au moins un composé de formule 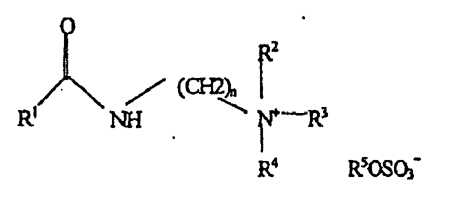 R¹-COOH : acide ricinoléique
R², R³ et R⁴ peuvent être identiques ou différents et sont constitués des groupes alkyle en C₁ à C₅ ou de groupes 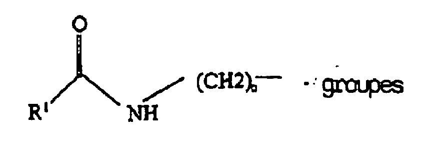 R⁵ est un groupe alkyle en C₁ à C₅, et n est un nombre entier de 1 à 5.

2. Dispersion aqueuse de noir de carbone selon la revendication 1, **caractérisée en ce que** le tensioactif non ionique est au moins un composé du groupe consistant en l'acide polyoxyéthylène-acrylique réticulé, les produits d'éthoxylation d'alcools gras, les nonylphénols polyéthoxylés, la polyvinylpyrrolidone, les esters d'acides gras du glycérol, les esters d'acides gras du propylèneglycol, les esters d'acides gras du sorbitol, les esters d'acides gras du sorbitol polyoxyéthyléné, le (acide tétraoléique)-polyoxyéthylène sorbitol, les alkyléthers polyéthoxylés, les alkylphényléthers polyéthoxylés, les glycols polyoxyéthylénés et polyoxypropylénés, les alkyléthers polyoxyéthylénés et polyoxypropylénés, les esters d'acides gras du polyéthylèneglycol, les esters d'alcools d'acides gras supérieurs, les esters d'acides gras de polyalcools.

3. Dispersion aqueuse de noir de carbone selon la revendication 1 ou 2, **caractérisée en ce que** la dispersion contient un noir de carbone pigmentaire ayant une granulométrie primaire moyenne de 8 à 80 nm et un indice DBP de 40 à 200 ml/100 g.

4. Dispersion aqueuse de noir de carbone selon les revendications 1 à 3, **caractérisée en ce que** le noir de carbone dispersé dans la dispersion a une granulométrie moyenne de 50 à 250 nm.

5. Dispersion aqueuse de noir de carbone selon la revendication 1, **caractérisée en ce que** le noir de carbone est présent en une quantité de 5 à 25 % en poids par rapport à la dispersion totale.

6. Dispersion aqueuse de noir de carbone selon la revendication 1, **caractérisée en ce que** le tensioactif cationique est présent en une quantité de 5 à 25 % en poids par rapport à la dispersion totale.

7. Dispersion aqueuse de noir de carbone selon la revendication 1, **caractérisée en ce que** le tensioactif cationique est une combinaison de mouillants ou un mélange d'au moins deux mouillants cationiques.

8. Procédé de fabrication de la dispersion aqueuse de noir de carbone selon les revendications 1 à 7, **caractérisé en ce qu'**on disperse du noir de carbone dans de l'eau, en même temps que le ou les mouillants, et éventuellement on utilise pour l'opération de dispersion des broyeurs à billes, des appareils à ultrasons ou un Ultra-Turrax.

9. Procédé de fabrication de la dispersion aqueuse de noir de carbone selon la revendication 8, **caractérisé en ce que** la dispersion aqueuse de noir de carbone est centrifugée ou filtrée après l'opération de dispersion.

10. Utilisation de la dispersion aqueuse de noir de carbone selon les revendications 1 à 7 pour fabriquer des encres, des vernis et des encres d'impression.

11. Utilisation de la dispersion aqueuse de noir de carbone selon la revendication 10 pour fabriquer des encres destinées à des imprimantes à jet d'encre.
